# EUROPÄISCHE PATENTANMELDUNG

(11) **EP 2 003 471 A1**
(43) Veröffentlichungstag der Anmeldung: **17.12.2008**
(21) Anmeldenummer: 07011385.7
(22) Anmeldetag: 11.06.2007
(51) Int. Cl.: G01S 13/93, G01S 17/93

(54) **Einziehbare Radarvorrichtung**

(71) Anmelder: IBEO Automobile Sensor GmbH, 22143 Hamburg (DE)
(72) Erfinder: Lages, Ulrich, Dr.-Ing., 21031 Hamburg (DE); Weckner, Kai, Dr., 79100 Freiburg (DE)
(74) Vertreter: Manitz, Finsterwald & Partner GbR

(57) **Zusammenfassung**

Die Erfindung betrifft ein Verfahren zum Betreiben einer in ein Fahrzeug, insbesondere einen PKW oder LKW, integrierten Erfassungseinrichtung, insbesondere eines Laserscanners, Radarsensors oder Videosystems, die zumindest teilweise relativ zu wenigstens einem Teil des Fahrzeugs zwischen wenigstens einer ersten Stellung und wenigstens einer zweiten Stellung bewegbar ist, wobei das Verfahren umfasst, dass wenigstens eine Fahrzeugzustandsvariable überwacht und in Abhängigkeit von dem Ergebnis der Überwachung, insbesondere bei einer Änderung der Fahrzeugzustandsvariable, die Erfassungseinrichtung von der ersten Stellung in die zweite Stellung bewegt wird, oder umgekehrt.

## Beschreibung

Die Erfindung betrifft ein Verfahren zum Betreiben einer in ein Fahrzeug, insbesondere in einen PKW oder einen LKW, integrierten Erfassungseinrichtung, insbesondere eines Laserscanners, eines Radarsensors oder eines Videosystems. Die Erfindung betrifft des Weiteren eine Erfassungseinrichtung sowie ein Fahrzeug mit wenigstens einer Erfassungseinrichtung.

Die Integration von Einrichtungen zur Umgebungserfassung in ein Fahrzeug kann in der Praxis insbesondere dann zu erheblichen Problemen führen, wenn bei der Integration das Fahrzeugdesign berücksichtigt werden soll oder muss. So sind beispielsweise Öffnungen oder zumindest spezielle Abdeckmaterialien an der äußeren Fahrzeugkontur erforderlich, um eine ausreichende Reichweite der jeweiligen Erfassungseinrichtung sicherzustellen. So ist es beispielsweise bekannt, Radarsensoren hinter dem Firmenemblem des Fahrzeugherstellers anzubringen. Auch ist es bekannt, spezielle Abdeckscheiben aus Kunststoff zu erstellen, die einen Teil der von außen sichtbaren Fahrzeugkontur bilden und den dahinter verbauten Sensor verdecken. Derartige Maßnahmen können jedoch die Funktionsfähigkeit der Erfassungseinrichtung beeinträchtigen. Außerdem ist man hierdurch hinsichtlich der Möglichkeiten, die Erfassungseinrichtung in das Fahrzeug zu integrieren, auf einen einzigen oder auf einige wenige Einbauorte beschränkt, was wiederum zu Platzproblemen führen kann.

Aufgabe der Erfindung ist es daher, eine Möglichkeit zu schaffen, Erfassungseinrichtungen derart in ein Fahrzeug zu integrieren, dass weder das Fahrzeugdesign noch die Funktionsfähigkeit der Erfassungseinrichtung beeinträchtigt wird.

Die Lösung dieser Aufgabe erfolgt durch die Merkmale des Verfahrensanspruchs 1.

Erfindungsgemäß wird eine Erfassungseinrichtung vorgesehen, die zumindest teilweise relativ zu wenigstens einem Teil des Fahrzeugs zwischen wenigstens einer ersten Stellung und wenigstens einer zweiten Stellung bewegbar ist, wobei das Verfahren umfasst, dass wenigstens eine Fahrzeugzustandsvariable überwacht und in Abhängigkeit von dem Ergebnis der Überwachung, insbesondere bei einer Änderung der Fahrzeugzustandsvariable, die Erfassungseinrichtung von der ersten Stellung in die zweite Stellung bewegt wird, oder umgekehrt.

Die erfindungsgemäße Bewegbarkeit der Erfassungseinrichtung eröffnet die Möglichkeit, die Position der Erfassungseinrichtung am Fahrzeug zu verändern. Insbesondere kann eine passive Stellung für die Erfassungseinrichtung vorgesehen werden, in der keine Erfassung der Fahrzeugumgebung erfolgt und die insbesondere hinsichtlich des Fahrzeugdesigns unkritisch ist. Die Erfassungseinrichtung kann gewissermaßen im Fahrzeug "versteckt" werden, wenn sie nicht benötigt wird. Als weitere Stellung der Erfassungseinrichtung ist eine aktive Stellung vorgesehen, in der die Erfassungseinrichtung zur Erfassung der Fahrzeugumgebung positioniert ist.

Die Erfindung macht sich die Erkenntnis zunutze, dass zumindest von den meisten Personen das Fahrzeugdesign ganz überwiegend nur bei stillstehendem Fahrzeug wahrgenommen wird. Wenn also beispielsweise die erfindungsgemäße Fahrzeugüberwachung derart ausgelegt ist, dass bei stillstehendem Fahrzeug die Erfassungseinrichtung sich in einer zurückgezogenen passiven Stellung befindet und erst bei Überschreiten einer bestimmten Mindestgeschwindigkeit von z.B. wenigen km/h in die aktive Stellung bewegt wird, dann wird hierdurch das Fahrzeugdesign praktisch nicht beeinträchtigt, da die Wahrnehmung des Designs eines sich in Bewegung befindlichen Fahrzeugs nur eine untergeordnete Rolle spielt.

Bei der gemäß der Erfindung überwachten Fahrzeugzustandsvariablen kann es sich also um die Fahrzeuggeschwindigkeit handeln, wie in dem obigen Beispiel erläutert. Allgemein eröffnet die erfindungsgemäße Verfahrbarkeit der Erfassungseinrichtung zusammen mit der Möglichkeit, die Verlagerung der Erfassungseinrichtung in Abhängigkeit von den Ergebnissen einer Fahrzeugüberwachung durchzuführen, eine Fülle von vorteilhaften Möglichkeiten für den Betrieb des Fahrzeugs bzw. der Erfassungseinrichtung.

So kann in einem weiteren Ausführungsbeispiel als eine Fahrzeugzustandsvariable die Fahrtrichtung des Fahrzeugs vorgesehen werden. Beispielsweise kann ein nur für die Überwachung der Umgebung hinter dem Fahrzeug vorgesehener Sensor während des normalen Fahrbetriebs in einer von außen unsichtbaren passiven Stellung verbleiben, wohingegen der Sensor in eine aktive Stellung verfahren wird, sobald das Fahrzeug beginnt, sich rückwärts zu bewegen. Diese Vorgehensweise kann für verschiedene Applikationen genutzt werden, beispielsweise in Verbindung mit einem Parkassistenten oder an Sonderfahrzeugen wie beispielsweise LKWs, um z.B. das Heranfahren an eine Laderampe in Rückwärtsrichtung zu erleichtern.

Des Weiteren kann als eine Fahrzeugzustandsvariable, die erfindungsgemäß überwacht wird, die Getriebestellung oder der Getriebezustand des Fahrzeugs vorgesehen werden. Bei den vorstehend erläuterten Applikationen kann beispielsweise die Erfassungseinrichtung in die aktive Stellung bewegt werden, wenn der Fahrer den Rückwärtsgang einlegt. Der Nachweis einer tatsächlichen Bewegung des Fahrzeugs in Rückwärtsrichtung ist dann keine Voraussetzung für das Verfahren des Sensors in die aktive Stellung.

In einem weiteren Ausführungsbeispiel kann das Fahrzeug daraufhin überwacht werden, ob der Motor läuft oder nicht, wobei die Erfassungseinrichtung unmittelbar nach dem Anlassen des Motors in die aktive Stellung und nach dem Ausschalten des Motors zurück in die passive Stellung verfahren wird. Allgemein ausgedrückt kann erfindungsgemäß also als eine Fahrzeugzustandsvariable ein hinsichtlich einer Ein-Stellung und einer Aus-Stellung unterscheidbarer Fahrzeugantriebsstatus vorgesehen werden.

Grundsätzlich ist es erfindungsgemäß möglich, dass gleichzeitig eine Mehrzahl von Fahrzeugzustandsvariablen überwacht wird. Des Weiteren kann erfindungsgemäß eine Mehrzahl von in ein Fahrzeug integrierten Erfassungseinrichtungen vorgesehen sein, die individuell in Abhängigkeit von einer oder mehreren Fahrzeugzustandsvariablen zwecks eines Verfahrens zwischen der ersten und der zweiten Stellung angesteuert werden können. So kann beispielsweise für einen Sensor, der zur Erfassung der Umgebung hinter dem Fahrzeug dient, eine Überwachung der Fahrtrichtung des Fahrzeugs und/oder der Getriebestellung des Fahrzeugs erfolgen, wie es vorstehend beispielhaft erläutert wurde, wohingegen ein oder mehrere Sensoren, welche die Umgebung vor dem Fahrzeug und/oder seitlich des Fahrzeugs erfassen, in Abhängigkeit von der Geschwindigkeit des Fahrzeugs in Vorwärtsrichtung zwischen der ersten Stellung und der zweiten Stellung verfahren werden.

Des Weiteren kann erfindungsgemäß eine Notfallfunktion vorgesehen werden, die bei Aktivierung die Erfassungseinrichtung unabhängig von der überwachten Fahrzeugzustandsvariable bewegt. Als Notfall kann beispielsweise der Nachweis einer bevorzugten Kollision oder eine andere Notfallsituation gewertet werden. Auf diese Weise kann die erfindungsgemäß bewegbare Erfassungseinrichtung in ein ohnehin vorhandenes Sicherheitskonzept des Fahrzeugs integriert werden, welches z.B. Rückhaltesysteme wie Airbags und Sicherheitsgurte sowie weitere Sicherheitseinrichtungen wie beispielsweise Fußgängerschutzeinrichtungen des Fahrzeugs umfasst.

Insbesondere kann vorgesehen sein, dass die bei Aktivierung der Notfallfunktion veranlasste Bewegung der Erfassungseinrichtung mit höherer Geschwindigkeit erfolgt als eine entsprechende Bewegung während des Normal-Verfahrbetriebs der Erfassungseinrichtung. So kann beispielsweise bei Detektion einer bevorstehenden Kollision die Erfassungseinrichtung schlagartig in eine zurückgezogene Stellung verfahren werden, um beispielsweise den Fußgängerschutz zu verbessern.

Die erfindungsgemäße Verfahrbarkeit der Erfassungseinrichtung kann des Weiteren in vorteilhafter Weise dazu benutzt werden, die Reinigung der Erfassungseinrichtung zu verbessern bzw. eine Reinigung überhaupt erst in einer praktisch realisierbaren und wirtschaftlich akzeptierbaren Art und Weise zu ermöglichen.

Die Reinigung von an Fahrzeugen angebrachten Erfassungseinrichtungen ist für die Erhaltung der Funktionsfähigkeit der Erfassungseinrichtung wesentlich. Erfassungseinrichtungen wie beispielsweise starre oder scannende Lasersensoren, die im unteren Bereich an der Front oder am Heck des Fahrzeugs positioniert werden sollen oder müssen, um für die jeweils gewünschten Applikationen optimal eingesetzt werden zu können, sind den Umgebungseinflüssen besonders stark ausgesetzt und neigen daher besonders zu Verschmutzungen, welche die Funktionsfähigkeit des Sensors beeinträchtigen oder zu Fehlfunktionen führen können. Der Reinigung von an Fahrzeugen verbauten Erfassungseinrichtungen kommt daher in der Praxis eine besondere Bedeutung zu.

Allerdings gestaltet sich eine solche Reinigung schwierig, da die hierfür benötigten Reinigungseinrichtungen in Bereichen, die den Erfassungseinrichtungen vorgelagert sind, positioniert werden müssen, wodurch das Fahrzeugdesign beeinträchtigt wird. Verfahrbare Reinigungseinrichtungen, die bei Nichtgebrauch in eine unauffällige Stellung überführt werden können, sind zwar prinzipiell denkbar, bringen jedoch einen erheblichen konstruktiven Aufwand mit sich. Eine ebenfalls mögliche Reinigung der Erfassungseinrichtung durch den Fahrzeugbenutzer selbst stößt zum einen in der Praxis auf wenig Akzeptanz und ist teilweise schwierig durchführbar oder sogar unmöglich, wenn die Erfassungseinrichtung hierfür ungünstig verbaut und insbesondere schlecht zugänglich ist.

Erfindungsgemäß kann nun im Hinblick auf die vorstehend genannten Probleme in einer Ausführungsform der Erfindung als eine Fahrzeugzustandsvariable der Verschmutzungszustand der Erfassungseinrichtung und/oder der Zustand einer Reinigungsüberwachungseinheit des Fahrzeugs vorgesehen werden. In Abhängigkeit von dem Ergebnis dieser Überwachung kann dann zunächst die Erfassungseinrichtung in eine passive Stellung bewegt und anschließend eine Reinigung der Erfassungseinrichtung durchgeführt werden.

Diese Vorgehensweise hat den Vorteil, dass die jeweils vorgesehene Reinigungseinrichtung nicht dazu in der Lage sein muss, die Erfassungseinrichtung in deren aktiver Stellung, also in deren bestimmungsgemäßer Erfassungsposition, zu reinigen, in der sich die Erfassungseinrichtung befinden muss, um die applikationsgemäße Umgebungserfassung durchführen zu können. Vielmehr kann für die Reinigung der Erfassungseinrichtung deren passive Stellung genutzt werden. Die Reinigungseinrichtung kann auf diese Weise "versteckt" in das Fahrzeug integriert werden, so dass sie von außen unsichtbar ist. Insbesondere ist es nicht erforderlich, eine wie auch immer geartete Verfahrbarkeit der Reinigungseinrichtung vorzusehen. Vielmehr kann die Reinigungseinrichtung an ihrem "versteckten" Einbauort verbleiben, so dass die Erfassungseinrichtung nicht nur relativ zu dem Fahrzeug, sondern auch relativ zu der insbesondere fahrzeugfesten Reinigungseinrichtung verfahren werden kann. Des Weiteren hat das erfindungsgemäße Reinigungskonzept den wesentlichen Vorteil, dass das Fahrzeugdesign durch die Reinigungseinrichtung in keiner Weise beeinträchtigt wird.

Erfindungsgemäß kann die Reinigungsüberwachung erfolgen, indem benutzerinitiierte und/oder unabhängig von dem Benutzer generierte Reinigungssignale nachgewiesen werden, woraufhin die Reinigung der Erfassungseinrichtung entweder unmittelbar durchgeführt oder erst einmal vorgemerkt wird, um die Reinigung zu einem späteren Zeitpunkt, wenn sich die Erfassungseinrichtung ohnehin in ihrer passiven Stellung befindet, durchführen zu können.

Ein benutzerinitiiertes Reinigungssignal kann beispielsweise erzeugt werden, wenn der Benutzer eine Anlage zur Scheinwerferreinigung oder den Scheibenwischer betätigt. Allgemein ausgedrückt können also die benutzerinitiierten Reinigungssignale von einer durch einen Benutzer vorgenommenen Betätigung anderer Reinigungs-, Sicherheits- und/oder Wartungsvorrichtungen des Fahrzeugs abgeleitet werden.

Die unabhängig von einem Benutzer generierten Reinigungssignale können beispielsweise erzeugt werden, wenn eine Überwachungseinrichtung, bei der es sich um die Erfassungseinrichtung selbst handeln kann, einen bestimmten Verschmutzungsgrad feststellt. Es ist auch möglich, die benutzerunabhängigen Reinigungssignale gemäß einem vorbestimmten festen Zeitplan und insbesondere in regelmäßigen Zeitabständen zu generieren, um eine regelmäßige Reinigung der Erfassungseinrichtung sicherzustellen.

Wie vorstehend bereits erwähnt, ist es erfindungsgemäß möglich, aber nicht zwingend, dass bei Nachweis eines wie auch immer generierten Reinigungssignals die Erfassungseinrichtung sofort in eine Stellung verfahren wird, in welcher eine Reinigungseinrichtung wirksam werden kann. Vielmehr ist es erfindungsgemäß auch möglich, eine durch das Reinigungssignal angezeigte erforderliche Reinigung lediglich vorzumerken, so dass die Reinigung zu einem geeigneten späteren Zeitpunkt automatisch durchgeführt werden kann.

Der tatsächliche Verschmutzungszustand der Reinigungseinrichtung kann ein zusätzliches Kriterium zur Erzeugung von Reinigungssignalen darstellen. Grundsätzlich können benutzerinitiierte oder benutzerunabhängig generierte Reinigungssignale von dem tatsächlichen Verschmutzungszustand der Erfassungseinrichtung unabhängig sein, d.h. die erfindungsgemäße Reinigungsüberwachung kann zulassen, dass eine Reinigung der Erfassungseinrichtung durchgeführt wird, obwohl noch kein kritischer Verschmutzungszustand erreicht ist.

Im Hinblick auf die der Erfindung zugrunde liegende Aufgabe ist im Rahmen der vorliegenden Anmeldung unter einer Bewegung der Erfassungseinrichtung eine solche Bewegung zu verstehen, die bei bestimmungsgemäß in das Fahrzeug integrierter bzw. am Fahrzeug verbauter Erfassungseinrichtung eine Änderung des äußeren Erscheinungsbildes des Fahrzeugs zumindest bei genauerem Hinsehen mit sich bringt. Bewegungen von einzelnen Komponenten der Erfassungseinrichtung, die das Aussehen oder Design des Fahrzeugs nicht verändern, sind keine Bewegungen der Erfassungseinrichtung zwischen einer ersten Stellung und einer zweiten Stellung im Sinne der Erfindung.

Insbesondere wird erfindungsgemäß die Erfassungseinrichtung als Ganzes bewegt, wobei hierunter nicht zu verstehen ist, dass sich Halterungen, Befestigungseinrichtungen, etc., die zur Anbringung der Erfassungseinrichtung am Fahrzeug dienen, ebenfalls bewegt werden. Wenn man derartige Komponenten als zu der Erfassungseinrichtung gehörend ansieht, dann ist insbesondere vorgesehen, dass eine diese Komponenten nicht umfassende Erfassungseinheit der Erfassungseinrichtung als Ganzes bewegt wird.

Die Erfindung betrifft außerdem eine Erfassungseinrichtung, insbesondere einen Laserscanner, einen Radarsensor oder ein Videosystem, zur Erfassung der Umgebung eines Fahrzeugs, insbesondere eines PKW oder LKW, die eine Erfassungseinheit und eine Halterung umfasst, welche dazu ausgebildet ist, die Erfassungseinheit an dem Fahrzeug anzubringen, wobei die Erfassungseinheit relativ zu der Halterung zwischen wenigstens einer ersten Position und wenigstens einer zweiten Position bewegbar ist.

Bevorzugt ist eine ansteuerbare Antriebseinrichtung vorgesehen, die dazu ausgebildet ist, die Erfassungseinheit in Abhängigkeit von Steuersignalen relativ zu der Halterung zu bewegen.

Insbesondere handelt es sich bei der Bewegung der Erfassungseinrichtung bzw. der Erfassungseinheit zwischen der ersten Stellung und der zweiten Stellung um eine Linearbewegung.

Die Erfindung betrifft des Weiteren ein Fahrzeug, insbesondere einen PKW oder einen LKW, der wenigstens eine Erfassungseinrichtung der hier angegebenen Art umfasst, die zumindest teilweise relativ zu wenigstens einem Teil des Fahrzeugs zwischen wenigstens einer ersten Stellung und wenigstens einer zweiten Stellung bewegbar ist.

Wie vorstehend bereits erwähnt, ist dabei insbesondere vorgesehen, dass die Erfassungseinrichtung in einer passiven Stellung vollständig innerhalb einer Außenkontur des Fahrzeugs gelegen ist. Insbesondere ist die Erfassungseinrichtung in der passiven Stellung von außen unsichtbar.

Die Integration der Erfassungseinrichtung in das Fahrzeug kann des Weiteren derart erfolgen, dass die Erfassungseinrichtung nicht nur in einer passiven Stellung, sondern auch in der aktiven Stellung vollständig innerhalb einer Außenkontur des Fahrzeugs gelegen ist.

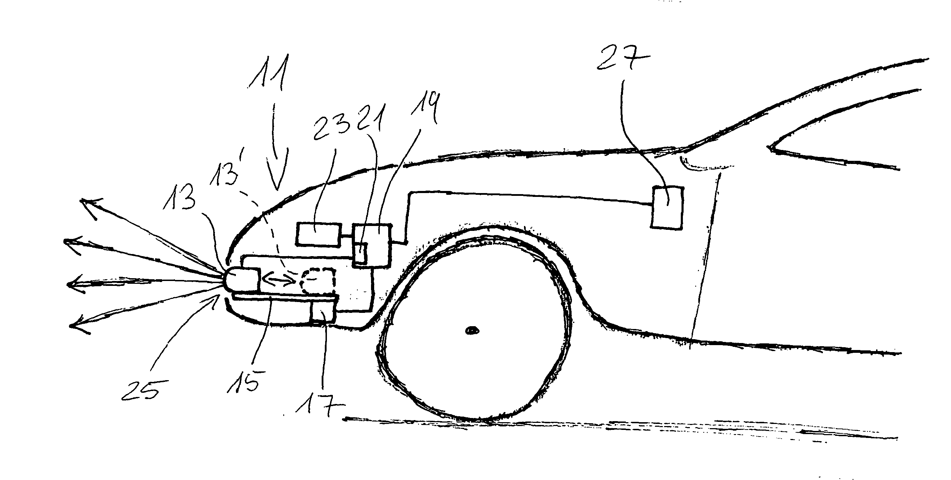

Vorteilhafte Weiterbildungen der Erfindung sind auch in den Ansprüchen, der Beschreibung sowie der Zeichnung angegeben.

Die Erfindung wird im Folgenden beispielhaft unter Bezugnahme auf die Zeichnung beschrieben, deren einzige Figur schematisch den vorderen Teil eines Fahrzeugs zeigt, in das eine erfindungsgemäße Erfassungseinrichtung integriert ist.

Die Figur ist nicht maßstabsgerecht und insbesondere hinsichtlich Größe und Anordnung der einzelnen Bestandteile rein schematisch zu verstehen.

Die beispielsweise in den Front-End-Bereich des Fahrzeugs integrierte erfindungsgemäße Erfassungseinrichtung 11 umfasst eine eigentliche Erfassungseinheit 13 sowie eine Halterung 15. Die Halterung 15 dient zur Anbringung bzw. Befestigung der Erfassungseinrichtung 11 am Fahrzeug.

Bei der Erfassungseinheit 13 handelt es sich beispielsweise um einen Laserscanner, der in einem bestimmten Winkelbereich die vor dem Fahrzeug gelegene Umgebung in vier unterschiedlich gegenüber der Horizontalen geneigten Ebenen abtastet, wie durch die entsprechenden Pfeile in der Figur angedeutet.

Grundsätzlich kann die Erfassungseinrichtung beliebig ausgestaltet sein. Anstelle eines Laserscanners kann beispielsweise ein Radarsensor oder ein Videosystem vorgesehen sein. Es kann auch eine Mehrzahl von Erfassungseinrichtungen gleicher oder unterschiedlicher Art am Fahrzeug vorgesehen sein.

Die Erfassungseinrichtung 11 ist in einem Bereich hinter einer Öffnung 25 in der Kontur des Fahrzeugs angeordnet. Bei dieser Öffnung 25 handelt es sich um ein Funktions- und/oder Designmerkmal des Fahrzeugs, das unabhängig von der Erfassungseinrichtung 11 ohnehin am Fahrzeug vorgesehen ist. Beispielsweise handelt es sich um eine Lufteintrittsöffnung.

Mit einer durchgezogenen Linie ist in der Figur die Erfassungseinheit 13 in einer aktiven Stellung gezeigt, in welcher die Umgebungserfassung erfolgt. Die Erfassungseinheit 13 befindet sich mit einer hier gekrümmt angedeuteten Abdeck- oder Abschlussscheibe im Bereich der Öffnung 25, so dass zumindest bei genauerem Hinsehen die in ihrer aktiven Stellung befindliche Erfassungseinheit 13 von außen sichtbar ist.

Mit einer gestrichelten Linie ist in der Figur eine zurückgezogene passive Stellung der Erfassungseinheit 13' angedeutet. In dieser zurückgezogenen Stellung ist die Erfassungseinheit 13' so weit von der Öffnung 25 entfernt im Fahrzeuginneren gelegen, dass die Erfassungseinheit 13' zumindest unter normalen Bedingungen von außen nicht wahrgenommen werden kann. In dieser passiven Stellung wird das Fahrzeugdesign somit in keiner Weise durch die Erfassungseinrichtung 11 beeinträchtigt.

Zwischen der aktiven Stellung und der passiven Stellung ist die Erfassungseinheit 13 relativ zu der ortsfest am Fahrzeug angebrachten Halterung 15 linear verfahrbar, wie es durch den Doppelpfeil in der Figur angedeutet ist. Die Verfahrbarkeit wird durch eine Antriebseinrichtung 17 ermöglicht. Die Art und Weise der Verstellbewegung kann auch von einer reinen Linearbewegung abweichen und grundsätzlich beliebig ausgelegt sein.

Mit der Antriebseinrichtung 17 ist eine Steuereinrichtung 19 verbunden, die grundsätzlich an einem beliebigen Ort innerhalb des Fahrzeugs angeordnet und prinzipiell räumlich und/oder funktionell in andere Steuereinrichtungen des Fahrzeugs - z.B. in eine zentrale Steuereinrichtung 27 - integriert sein kann. In die Steuereinrichtung 19 ist eine Reinigungsüberwachungseinheit 21 integriert, die dazu dient, einen Verschmutzungszustand der Erfassungseinheit 13 zu ermitteln bzw. entsprechende Informationen von der Erfassungseinheit 13 zu empfangen, wenn die Erfassungseinheit 13 dazu in der Lage ist, ihren Verschmutzungszustand selbst zu ermitteln.

Ferner kommuniziert die Steuereinrichtung 19 mit einer Reinigungseinrichtung 23, die derart angeordnet und ausgebildet ist, dass sie die Reinigung der Erfassungseinrichtung 13' und insbesondere die Reinigung der erwähnten Abdeck- oder Abschlussscheibe nur bei in der passiven Stellung befindlicher Erfassungseinheit 13' durchführen kann. Die Steuereinrichtung 19 aktiviert die Reinigungseinrichtung 23, wenn - insbesondere unter Mitwirkung der Reinigungsüberwachungseinheit 21 - entsprechend vorgegebene Bedingungen erfüllt sind, wie beispielsweise im Einleitungsteil erläutert.

Diejenigen Komponenten, die für den eigentlichen Erfassungsbetrieb der Erfassungseinheit 13 vorgesehen sind, sind der Einfachheit halber in der Figur nicht dargestellt und können beispielsweise in die Steuereinrichtung 19 oder in die zentrale Fahrzeugsteuereinrichtung 27 integriert sein.

Hinsichtlich der Art und Weise, wie die erfindungsgemäße Verfahrbarkeit der Erfassungseinrichtung 11 grundsätzlich und in verschiedenen Applikationen genutzt werden kann, wird insbesondere auch auf den Einleitungsteil verwiesen.

### Bezugszeichenliste

- 11: Erfassungseinrichtung
- 13, 13': Erfassungseinheit
- 15: Halterung
- 17: Antriebseinrichtung
- 19: Steuereinrichtung
- 21: Reinigungsüberwachungseinheit
- 23: Reinigungseinrichtung
- 25: Öffnung
- 27: Zentrale Fahrzeugsteuereinrichtung

## Patentansprüche

1. Verfahren zum Betreiben einer in ein Fahrzeug, insbesondere einen PKW oder LKW, integrierten Erfassungseinrichtung (11), insbesondere eines Laserscanners, Radarsensors oder Videosystems, die zumindest teilweise relativ zu wenigstens einem Teil des Fahrzeugs zwischen wenigstens einer ersten Stellung und wenigstens einer zweiten Stellung bewegbar ist,
wobei das Verfahren umfasst, dass
wenigstens eine Fahrzeugzustandsvariable überwacht und in Abhängigkeit von dem Ergebnis der Überwachung, insbesondere bei einer Änderung der Fahrzeugzustandsvariable, die Erfassungseinrichtung (11) von der ersten Stellung in die zweite Stellung bewegt wird, oder umgekehrt.

2. Verfahren nach Anspruch 1,
**dadurch gekennzeichnet,**
**dass** die Erfassungseinrichtung (11) oder eine Erfassungseinheit (13) der Erfassungseinrichtung (11) als Ganzes bewegt wird.

3. Verfahren nach Anspruch 1 oder 2,
**dadurch gekennzeichnet,**
**dass** die Erfassungseinrichtung (11) zwischen wenigstens einer passiven Stellung, in der keine Erfassung der Fahrzeugumgebung erfolgt, und wenigstens einer aktiven Stellung bewegbar ist, in der die Erfassungseinrichtung (11) zur Erfassung der Fahrzeugumgebung positioniert ist.

4. Verfahren nach einem der vorhergehenden Ansprüche,
**dadurch gekennzeichnet,**
**dass** gleichzeitig eine Mehrzahl von Fahrzeugzustandsvariablen überwacht wird.

5. Verfahren nach einem der vorhergehenden Ansprüche,
**dadurch gekennzeichnet,**
**dass** als eine Fahrzeugzustandsvariable die Geschwindigkeit des Fahrzeugs vorgesehen wird.

6. Verfahren nach einem der vorhergehenden Ansprüche,
**dadurch gekennzeichnet,**
**dass** als eine Fahrzeugzustandsvariable die Fahrtrichtung des Fahrzeugs vorgesehen wird.

7. Verfahren nach einem der vorhergehenden Ansprüche,
**dadurch gekennzeichnet,**
**dass** als eine Fahrzeugzustandsvariable ein hinsichtlich einer Ein-Stellung und einer Aus-Stellung unterscheidbarer Fahrzeugantriebsstatus vorgesehen wird.

8. Verfahren nach einem der vorhergehenden Ansprüche,
**dadurch gekennzeichnet,**
**dass** als eine Fahrzeugzustandsvariable die Getriebestellung des Fahrzeugs vorgesehen wird.

9. Verfahren nach einem der vorhergehenden Ansprüche,
**dadurch gekennzeichnet,**
**dass** zusätzlich eine Notfallfunktion vorgesehen wird, die bei Aktivierung, insbesondere bei Detektion einer bevorstehenden Notfallsituation, die Erfassungseinrichtung (11) unabhängig von der überwachten Fahrzeugzustandsvariable bewegt.

10. Verfahren nach einem der vorhergehenden Ansprüche,
**dadurch gekennzeichnet,**
**dass** als eine Fahrzeugzustandsvariable der Verschmutzungszustand der Erfassungseinrichtung (11) und/oder der Zustand einer Reinigungsüberwachungseinheit (21) des Fahrzeugs vorgesehen wird.

11. Verfahren nach Anspruch 10,
**dadurch gekennzeichnet,**
**dass** in Abhängigkeit von dem Ergebnis der Überwachung zunächst die Erfassungseinrichtung (11) in eine passive Stellung bewegt und anschließend eine Reinigung der Erfassungseinrichtung (11) durchgeführt wird.

12. Verfahren nach Anspruch 10 oder 11,
**dadurch gekennzeichnet, dass** zur Reinigungsüberwachung benutzerinitiierte, insbesondere von einem Verschmutzungszustand der Erfassungseinrichtung (11) unabhängige, Reinigungssignale nachgewiesen werden.

13. Verfahren nach Anspruch 12,
**dadurch gekennzeichnet,**
**dass** die benutzerinitiierten Reinigungssignale von einer durch einen Benutzer vorgenommenen Betätigung anderer Reinigungsvorrichtungen des Fahrzeugs abgeleitet werden.

14. Verfahren nach einem der Ansprüche 10 bis 13, **dadurch gekennzeichnet,**
**dass** zur Reinigungsüberwachung unabhängig von dem Benutzer generierte, insbesondere von einem Verschmutzungszustand der Erfassungseinrichtung (11) unabhängige, Reinigungssignale nachgewiesen werden.

15. Verfahren nach Anspruch 14,
**dadurch gekennzeichnet,**
**dass** die benutzerunabhängigen Reinigungssignale automatisch, insbesondere in regelmäßigen Zeitabständen, generiert werden.

16. Erfassungseinrichtung, insbesondere Laserscanner, Radarsensor, oder Videosystem, zur Erfassung der Umgebung eines Fahrzeugs, insbesondere eines PKW oder LKW, die eine Erfassungseinheit (13) und eine Halterung (15) umfasst, welche dazu ausgebildet ist, die Erfassungseinheit (13) an dem Fahrzeug anzubringen, wobei die Erfassungseinheit (13) relativ zu der Halterung (15) zwischen wenigstens einer ersten Position und wenigstens einer zweiten Position bewegbar ist.

17. Erfassungseinrichtung nach Anspruch 16,
**dadurch gekennzeichnet,**
**dass** eine ansteuerbare Antriebseinrichtung (17) vorgesehen ist, die dazu ausgebildet ist, die Erfassungseinheit (13) in Abhängigkeit von Steuersignalen relativ zu der Halterung (15) zu bewegen.

18. Erfassungseinrichtung nach Anspruch 16 oder 17,
**dadurch gekennzeichnet,**
**dass** die Bewegung der Erfassungseinheit (13) eine Linearbewegung ist.

19. Fahrzeug, insbesondere PKW oder LKW, mit wenigstens einer Erfassungseinrichtung (11) insbesondere nach einem der Ansprüche 16 bis 18, insbesondere einem Laserscanner, Radarsensor oder Videosystem, die zumindest teilweise relativ zu wenigstens einem Teil des Fahrzeugs zwischen wenigstens einer ersten Stellung und wenigstens einer zweiten Stellung bewegbar ist.

20. Fahrzeug nach Anspruch 19,
**dadurch gekennzeichnet,**
**dass** die Erfassungseinrichtung (11) zwischen wenigstens einer passiven Stellung, in der keine Erfassung der Fahrzeugumgebung erfolgt, und wenigstens einer aktiven Stellung bewegbar ist, in der die Erfassungseinrichtung (11) zur Erfassung der Fahrzeugumgebung positioniert ist.

21. Fahrzeug nach Anspruch 20,
**dadurch gekennzeichnet, dass** die Erfassungseinrichtung (11) in der passiven Stellung vollständig innerhalb einer Außenkontur des Fahrzeugs gelegen ist.

22. Fahrzeug nach Anspruch 20 oder 21, **dadurch gekennzeichnet,**
**dass** die Erfassungseinrichtung (11) in der passiven Stellung von außen unsichtbar ist.

23. Fahrzeug nach einem der Ansprüche 20 bis 22, **dadurch gekennzeichnet,**
**dass** die Erfassungseinrichtung (11) sowohl in der passiven Stellung als auch in der aktiven Stellung vollständig innerhalb einer Außenkontur des Fahrzeugs gelegen ist.

24. Fahrzeug nach einem der Ansprüche 19 bis 23,
**dadurch gekennzeichnet,**
**dass** das Fahrzeug oder die Erfassungseinrichtung (11) eine Steuereinrichtung (19) umfasst, die dazu ausgebildet ist, wenigstens eine Fahrzeugzustandsvariable zu überwachen und in Abhängigkeit von dem Ergebnis der Überwachung, insbesondere bei einer Änderung der Fahrzeugzustandsvariable, die Erfassungseinrichtung (11) von der ersten Stellung in die zweite Stellung zu bewegen, oder umgekehrt.

25. Fahrzeug nach einem der Ansprüche 19 bis 24,
**dadurch gekennzeichnet,**
**dass** das Fahrzeug oder die Erfassungseinrichtung (11) eine Reinigungsüberwachungseinheit (21) umfasst, die dazu ausgebildet ist, benutzerinitiierte und/oder unabhängig von einem Benutzer generierte Reinigungssignale nachzuweisen und bei Nachweis eines Reinigungssignals zunächst die Erfassungseinrichtung (11) in eine passive Stellung zu bewegen und anschließend eine Reinigung der Erfassungseinrichtung (11) zu veranlassen.

26. Fahrzeug nach einem der Ansprüche 19 bis 25,
**dadurch gekennzeichnet,**
**dass** eine Reinigungseinrichtung (23) für die Erfassungseinrichtung (11) derart in das Fahrzeug integriert ist, dass die Reinigungseinrichtung (23) von außen unsichtbar ist.

27. Fahrzeug nach einem der Ansprüche 19 bis 26,
**dadurch gekennzeichnet,**
**dass** die Erfassungseinrichtung (11) gemäß einem Verfahren nach einem der Ansprüche 1 bis 15 betreibbar ist.
